# EUROPÄISCHE PATENTANMELDUNG

(11) **EP 2 177 334 A2**
(43) Veröffentlichungstag der Anmeldung: **21.04.2010**
(21) Anmeldenummer: 09170266.2
(22) Anmeldetag: 15.09.2009
(51) Int. Cl.: B29C 44/34

(54) **Verfahren zum Polymerschäumen**

(30) Priorität: 15.09.2008 AT 14342008
(71) Anmelder: Hammerschmid Maschinenbau Gmbh, 4190 Bad Leonfelden (AT)
(72) Erfinder: Hammerschmid, Johann, 4190 Leonfelden (AT); Hofstätter, Thomas, 4020 Linz (AT); Reingruber, Martin, 4191 Vorderweißenbach (AT)
(74) Vertreter: Margotti, Herwig Franz

(57) **Zusammenfassung**

Verfahren zum Polymerschäumen durch Aufschmelzen des Polymers, Überführung der Schmelze in eine Mischeinheit unter Einbringen eines Treibmittels und Austragen des Schmelze/Treibmittelgemisches durch eine Austrittsöffnung, worin in eine Polymerschmelze ein Treibmittel eingebracht wird, die Mischung aus Polymer/Treibmittel in die Mischeinheit und danach in ein Gefäß B übergeführt und gegebenenfalls gekühlt wird. Die Mischung wird aus dem Gefäß B in das Gefäß A rückgeführt und aus Gefäß A wieder in das Gefäß B übergeführt, wobei in die Mischung Treibmittel eingebracht werden kann. Schließlich wird die Mischung durch eine verschließbare Düse ausgetragen, wobei die Rückführung der Mischung aus dem Gefäß B in das Gefäß A gegebenenfalls wiederholt wird und wobei die Polymerschäumung vor dem Austritt durch die Austrittsöffnung verhindert wird.

## Beschreibung

Die vorliegende Erfindung betrifft ein Verfahren zum Polymerschäumen.

Die Herstellung von Polymerschäumen erfolgt durch die Erzeugung oder Einbringung einer gasförmigen Phase in die Polymermatrix. Ziel ist es dabei, das Gas möglichst gleichmäßig in die Polymermatrix zu verteilen, um eine gleichmäßige und homogene Schaumstruktur zu erreichen. Die Einbringung des Gases kann auf verschiedene Weise erfolgen. Bei Polyurethanschäumen erfolgt die Ausbildung der Gasphase während der Synthese der Polymere. Meist erfolgt aber die Erzeugung der Gasphase jedoch durch Zugabe eines Treibmittels. Als Treibmittel werden Substanzen bezeichnet, die durch chemische Reaktionen (chemische Treibmittel) oder durch Phasenübergang (physikalische Treibmittel) Gase freisetzen. Bei der Schaumextrusion oder beim Schaumspritzguss wird das chemische Treibmittel in Form eines Masterbatches dem Polymer beigemengt bzw. physikalisches Treibmittel direkt in die Schmelze unter Druck injiziert. Die Injektion wird als Direktbegasung bezeichnet und findet bei der Verarbeitung von thermoplastischen Polymeren Einsatz.

Bei der Schaumextrusion mit physikalischem Treibmittel wird das flüssige oder gasförmige Treibmittel nach dem Aufschmelzen und Homogenisieren des Polymers direkt in den Zylinder des Extruders gespritzt. Hierfür ist eine entsprechend aufwendige Einspritzvorrichtung erforderlich, da das Treibmittel unter hohem Druck zudosiert wird. Vor dem Aufschäumen am Düsenausgang des Extruders muss das Polymer-Treibmittel-Gemisch abgekühlt werden, um eine hohe Löslichkeit des Treibgases in der Polymerschmelze zu erreichen und um die Viskosität der Polymerschmelze und somit die Schmelzefestigkeit zu erhöhen. Hierfür wird häufig ein Tandemextruder eingesetzt. Dabei erfolgen im ersten Extruder das Aufschmelzen des Polymers und die Zugabe des Treibmittels. Im zweiten Extruder wird das Gas gleichmäßig in der Polymerschmelze verteilt, und das Gemisch wird auf Extrusionstemperatur heruntergekühlt. Das Kühlen der Schmelze ist notwendig, um ein optimales Zellwachstum nach der Düse zu gewährleisten. Zu hohe Temperaturen führen zum Gasverlust in Folge aufreißender Zellwände, wohingegen bei zu niedrigen Temperaturen einsetzende Kristallisationsvorgänge das Aufschäumen unterbinden.

Die Schaumbildung wird von einer Vielzahl verschiedener Faktoren beeinflusst. Neben den Eigenschaften des Polymers sowie Art und Anteil des verwendeten Treibmittels spielen insbesondere die Verfahrensbedingungen, die bei der Schaumbildung vorherrschen, eine entscheidende Rolle. So ist die Löslichkeit und die Sättigungskonzentration des Treibgases in der Polymerschmelze von der Verarbeitungstemperatur und dem Verarbeitungsdruck abhängig. Die Temperatur hat auch einen entscheidenden Einfluss auf die Viskosität der Polymerschmelze während des Schaumbildungsprozesses. Hohe Verarbeitungstemperaturen setzen die Viskosität der Schmelze herab, was aufgrund der ebenfalls verringerten Schmelzefestigkeit ein Kollabieren der Schaumstruktur zur Folge haben kann.

Zum Treibmittel werden häufig noch weitere Additive zugegeben. Von entscheidender Bedeutung für die entstehende Schaumstruktur sind dabei Nukleierungsmittel. Die Nukleierungsmittel dienen zur Erhöhung der Nukleierungsdichte und der Nukleierungsrate der Gasblasen. Man unterscheidet aktive und passive Nukleierungsmittel. Aktive Nukleierungsmittel zersetzen sich während des Verarbeitungsprozesses und spalten gasförmige Produkte ab. Prinzipiell wirken alle chemischen Treibmittel auch als aktives Nukleierungsmittel, weshalb beim Schäumen mit chemischen Treibmitteln auf eine Zugabe von Nukleierungsmittel verzichtet werden kann. Passive Nukleierungsmittel sind anorganische Partikel z.B. Talkum, Titandioxid oder Siliziumoxid. Die fein verteilten Partikel setzen die für die Zellbildung notwendige Aktivierungsenergie herab. Die nukleierende Wirkung der passiven Nukleierungsmittel hängt von der Größe der Partikel, deren Verteilung in der Polymermatrix und ihrer Oberflächenrauhigkeit ab.

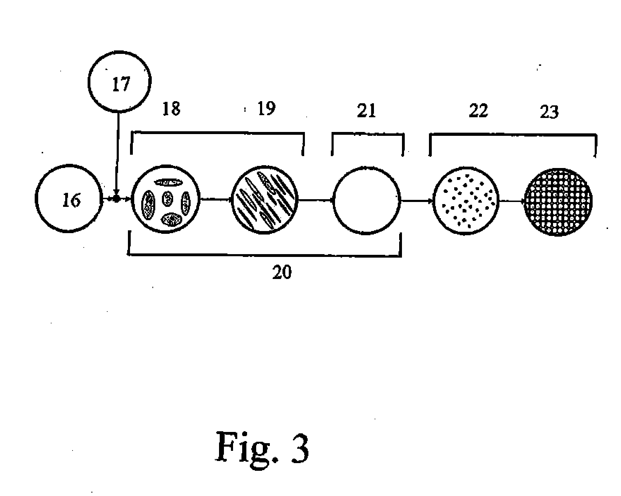

In Fig. 3 ist der Schaumbildungsprozess schematisch dargestellt.

Im Schritt 1 erfolgt die Bildung einer homogenen Polymer-Gas-Lösung im Zylinder des Extruders. Das frei werdende oder direkt zugegebene Treibgas wird unter hohem Druck in der vorher plastifizierten Polymerschmelze gelöst und durch die Scherwirkung der Schnecken gleichmäßig verteilt.
Die Löslichkeit des Gases in der Polymerlösung hängt einerseits von der Polymer-Gas Wechselwirkung ab und weiters von Druck und Temperatur. Die bei den jeweiligen Bedingungen maximal lösliche Gasmenge wird als Sättigungskonzentration bezeichnet. Großen Einfluss auf eine homogene Verteilung des Treibgases im Polymer hat auch eine Verkürzung der Diffusionswege infolge effektiver Durchmischung. Mangelhafte Prozessbedingungen (z. B. geringfügige Durchmischung, zu niedriger Druck) führen zur Ausbildung von Zweiphasensystemen und letztendlich zu groben Kavitäten im Endprodukt. Weiters verändert das in der Polymerschmelze gelöste Gas die rheologischen Eigenschaften der Schmelze. Durch Vergrößerung des freien Volumens resultiert ein Verdünnungseffekt, der sich in einer Viskositätserniedrigung der Polymerschmelze äußert.

Im Schritt 2 wird durch den starken Druckabfall in der Düse des Extruders die Löslichkeit des Gases in der Polymerschmelze schlagartig herabgesetzt und die Bildung von Zellkeimen eingeleitet. Dieser Prozess wird als Zellnukleierung bezeichnet.
Hierbei erfolgt die Bildung von stabilen, wachstumsfähigen Zellkeimen in der Polymer-Gas-Lösung durch eine schnelle Änderung des thermodynamischen Gleichgewichtes (Temperaturerhöhung oder Druckerniedrigung). Die Initiierung der Keimbildung wird im Allgemeinen durch einen Druckabfall in der Düse bewerkstelligt, da eine genügend schnelle Temperaturerhöhung auf Grund der geringen Wärmeleitfähigkeit der Polymer-Gas-Lösung nicht möglich ist.
Die Keimbildung kann grundsätzlich über zwei verschiedene Mechanismen erfolgen. Bei der homogenen Nukleierung erfolgt die Keimbildung in der reinen Polymerschmelze ohne jegliche Verunreinigungen. Bei Vorhandensein einer zweiten Phase (z. B. Nukleierungsmittel, Additiv) kommt es an der Phasengrenzfläche zur Keimbildung und man spricht von heterogener Nukleierung.
Die Keimbildung ist weiters stark von der Druckabfallsrate (Δp/Δt) in der Düse abhängig. Ist diese zu gering, bilden sich Schäume mit größerem Zelldurchmesser und geringerer Zellzahl. Dies erklärt sich aus dem Umstand, dass die Verweilzeit in der Düse bei kleinen Druckabfallsraten größer ist, und somit gelöstes Gas in bereits nukleierte Zellen diffundieren kann. Dadurch können sich in der Polymer/Gas - Lösung Regionen mit niedrigeren Gaskonzentrationen ausbilden. In diesen Bereichen ist zu wenig Gas vorhanden um zusätzliche Zellen zu nukleieren. Die Zellnukleierung steht also in Konkurrenz mit dem Zellwachstum.

Im Schritt 3 schließt sich das Zellwachstum an, in dem die gebildeten Zellen, aufgrund der Diffusion des Gases aus der Polymer-Gas-Lösung in die Gasblase, anwachsen. Ab Überschreiten des kritischen Radius r* kommt es, bedingt durch die Druckdifferenz zwischen dem Innern der Blase und der Polymerlösung, zum Zellwachstum. Dieses Wachstum ist gesteuert von der Oberflächenspannung und den viskoelastischen Eigenschaften (insbesondere der Dehnviskosität) des umgebenden Materials. Wurde das gesamte Gas aus der Umgebung der Zelle in die Zelle gedrückt, ist das weitere Wachstum diffusionsgesteuert, da Gas aus entfernten Regionen durch Diffusion nachgeliefert werden muss. Weiters spielen nicht-isotherme Effekte, wie Desorptionswärme und/oder der Joule Thompson Effekt eine Rolle.

Der Schaumbildungsprozess wird im Schritt 4 durch die sogenannte Schaumstabilisierung oder Fixierung abgeschlossen. Die Schaumstabilisierung erfolgt durch Absenkung der Temperatur unter die Einfriertemperatur, welche im Fall der amorphen Thermoplaste der Glasübergangstemperatur T_{g} und im Fall der teilkristallinen Thermoplaste der Kristallisationstemperatur Tₘ entspricht.
Die Stabilisierung erfolgt grundsätzlich durch Viskositätserhöhung infolge sinkender Temperaturen und durch Kristallisationsvorgänge. Der Bereich, in dem ein stabiles Zellwachstum möglich ist, ist bei amorphen Kunststoffen breiter im Vergleich zu teilkristallinen Polymeren, da bei den erstgenannten die Scherviskosität mit sinkender Temperatur langsamer zunimmt. Einen entscheidenden Einfluss auf die Schaumstruktur hat die Zeit, die zwischen dem Beginn des Zellwachstums und dem Einfrieren der Zellstruktur vergeht. Wenn die Schaumstabilisierung sehr schnell erfolgt, was zum Beispiel durch Abschrecken des Schaums erreicht werden kann, können die nukleierten Zellen nur sehr kurze Zeit wachsen, und die gebildeten Schaumzellen sind sehr klein. Durch die kurze Zellwachstumsphase kann nur ein Teil des Gases in die Zellen diffundieren, wodurch nur ein geringer Aufschäumgrad erzielt wird. Aufgrund des geringen Umgebungsdruckes ist eine Diffusion des Gases aus dem Schaum in die Umgebung begünstigt. Wenn die Zeit bis zur Stabilisierung der Schaumstruktur zu lange dauert, kann ein Teil des Gases aus dem Inneren des Schaums in die Umgebung entweichen und die gebildeten Schaumzellen können wieder in sich zusammenfallen.

Technische Verfahren zur Herstellung von Polymerschäumen sind bekannt.

Beim Extrusionsschäumen zur kontinuierlichen Herstellung von Polymerschäumen folgt auf die Vermischung des Polymers mit dem Treibmittel und gegebenenfalls Additiven eine Abkühlphase (Kühlstrecke) bevor die Polymerschäumung mit Hilfe des Druckabfalls in der Extruderdüse erfolgt.

Beim Spritzschäumen (diskontinuierliche Herstellung von Polymerschäumen) konkurrieren verschiedene Anlagenkonzepte zum Einsatz von Treibmitteln miteinander. Die Unterschiede dieser Konzepte beziehen sich im wesentlichen auf die Art der Zudosierung des Treibmittels, weniger auf die Prozessführung.
Zur Herstellung konventioneller Schaumstoffe im Spritzgießverfahren unter Einsatz physikalischer Treibmittel wird beispielsweise das folgende Verfahren angewandt:
Die Plastifizierung des Polymers und die Injektion der Schmelze in die Kavität sind maschinentechnisch voneinander entkoppelt. Das Treibmittel wird in einen kontinuierlichen arbeitenden Extruder injiziert. Das Polymer/Treibmittel-Gemisch wird in diesem homogenisiert und in den Vorraum eines Einspritzkolbens gefördert. Anschließend wird die aufdosierte Schmelze mit hoher Geschwindigkeit in die Kavität eingespritzt.
Vorteil diese Konzepts sind die geringen Anforderungen an die Dosierstation, die zur Injektion des physikalischen Treibmittels Verwendung finden kann. Aufgrund des annähernd konstanten Gegendrucks im Extruder kann das Treibmittel druckgesteuert zudosiert werden. Die im Falle der Kolbeneinspritzung geringen Leckströme gewährleisten eine hohe Präzision in Hinblick Bauteilmasse auch bei großen Einspritzgeschwindigkeiten. Ein entscheidender Nachteil dieses Konzeptes ist, dass eine Spezialmaschine zum Spritzgießen mikrozelluläre Schäume notwendig ist.

Ein weiteres Konzept sieht die Zudosierung des Treibmittels in die Schmelze über einen bzw. mehrere Injektoren in der zweiten Hälfte des Plastifizierzylinders vor. Die mit Misch-und Scherelementen ausgestattete Kolbenschnecke erlaubt eine Homogenisierung des Polymer/Treibmittel-Gemischs. Aufgrund der Viskositätsabsenkung infolge der Zudosierung des Treibmittels in das Polymer wird Schmelze im Bereich bis zur Verschlussdüse, also schwerpunktmäßig in der mit Mischelementen versehenen Schneckenzone, Wärme entzogen.
Nachteil dieses Verfahren ist dass die Anlagentechnik zwar flexibel einsetzbar, aber relativ komplex ist. Neben der Installation eines oder mehrerer Injektoren im Plastifizierzylinder und einer geeigneten, präzise arbeitenden Dosierstation für das Treibmittel, ist eine spezielle Schnecke mit Misch- und Scherelementen Voraussetzung. Der letzte Punkt macht auch eine Verlängerung des Plastifizieraggregats notwendig. Ein weiterer Nachteil ist, dass die wirksame Mischlänge der Schnecke verändert, da die Schnecke sich relativ zum Injektionsport bewegt. Kompensiert werden kann dieser Nachteil durch mehrere in Kaskade angesteuerte Injektoren, die jedoch eine entsprechende aufwändige Steuerungstechnik erfordern. Durch die Position der Eingasungsports ist weiterhin auch das minimale Dosiervolumen vorgegeben. Dies schränkt das Anwendungsspektrum der Plastifiziereinheit im Vergleich zu konventionellen Aggregaten ein. Diese Technik ist eng mit dem Begriff MuCell-Technologie der Firma Trexel, Woborn/USA verknüpft und gilt als erste marktgängige Technologie im Bereich des Spritzgießens, die eine Herstellung von Formteilen mit mikrozellulärer Struktur erlaubt. Das Verfahren sieht die Injektion eines überkritischen Inertgases in das Plastifizieraggregat vor. Neben einer Modifikation des Hydrauliksystems und der Steuerung der Spritzgießmaschine ist aufgrund der verlängerten Plastifiziereinheit ein weiteres Maschinenbett notwendig. Die Ansteuerung der Injektionsports erfolgt in Abhängigkeit der Schneckenposition.

Zur physikalischen Direktbegasung thermoplastischer Schmelzen ist eine Lösung bekannt, die unter dem Begriff "ErgoCell" vermarktet wird. Kern der ErgoCell-Technik ist eine Einheit mit axial angeordneten Komponenten. Dieses Modul für die Dosierung von Gas und dessen Vermischung mit der Schmelze wird einer Standard-Plastifizierteinheit mit 20D Länge vorgeschaltet. Es ermöglicht die Homogenisierung des Schmelze/Gas-Gemisches unabhängig von der Plastifizierung. Neben diesem Modul umfasst das Paket "ErgoCell" eine hydraulische Verschlussdüse, die volle Integration der Bedienung in die Steuerung der Maschine und die Gasstation. Das ErgoCell-Modul enthält die folgenden Komponenten:
- Einspritzkolben (schließt sich unmittelbar an die Plastifizierschnecke an),.
- Mischer mit Außengeometrie, die über den Kolben mittels Keilverzahnung angetrieben wird und mit Innengeometrie, die fest im Gehäuse des Moduls eingebaut ist),
- Gasdüsen zur präzisen Gaszufuhr.

Eine weitere Verfahrensvariante des Schaumspritzgießens sieht die Injektion des Treibmittels durch eine spezielle Injektionsdüse vor, die zwischen Verschlussdüse und Plastifizieraggregat installiert ist. Die Schmelze strömt während der Einspritzphase aus dem Schneckenvorraum durch die Injektionsdüse und wird dort mit Treibmittel beladen. Hierbei wird die Rohrströmung der Schmelze an der Schneckenspitze über ein Torpedo in eine Ringspaltströmung überführt. Das Treibmittel strömt durch permeable Sintermetallhülsen in die Polymerschmelze. Über die gesamte Fläche der Sintermetallhülsen kann so das Treibmittel in die vorbeiströmende Schmelze eindiffundieren. Nach der Anreicherung mit Treibmittel im Bereich der Sintermetallhülsen durchströmt die Schmelze die nachgeschalteten statischen Mischelemente, bevor sie über eine Verschlussdüse in die Kavität des Spritzgießwerkzeuges injiziert wird, wodurch herkömmliche Spritzgießmaschinen für Kompaktspritzgießanwendungen ohne wesentlichen Aufwand kurzfristig zum Thermoplastschaumspritzgießen mit physikalischen Treibmitteln umgerüstet werden können.

In allen Verfahren zur Herstellung von Polymerschäumen ist eine homogene Durchmischung des Polymers mit dem Treibmittel, insbesondere einem physikalischen Treibmittel und ein vorbestimmter Anteil des Treibmittels in der Polymer/Treibmittel Mischung von größter Wichtigkeit.

Es wurde nun überraschenderweise ein Verfahren gefunden, bei dem Verfahrensparameter beim Einmischen des Treibmittels in das Polymer verändert werden können, sodass mit Hilfe dieses Verfahrens neuartige, geschäumte Kunststoffteile hergestellt werden können.

In einem Aspekt stellt die vorliegende Erfindung ein Verfahren zum Polymerschäumen durch Aufschmelzen des Polymers, Überführung der Schmelze in eine Mischeinheit unter Einbringen eines Treibmittels und Austragen des Schmelze/Treibmittelgemisches durch eine Austrittsöffnung, zur Verfügung, das dadurch gekennzeichnet ist, dass
a) in eine Polymerschmelze, entweder unmittelbar bevor die Schmelze aus einem Gefäß A in eine Mischeinheit übergeführt wird, oder in einer Mischeinheit, ein Treibmittel, insbesondere ein Gas, insbesondere ein Gas im superkritischen Zustand, eingebracht wird,
b) die Mischung aus Polymer/Treibmittel aus a) gegebenenfalls in die Mischeinheit übergeführt wird,
c) die Mischung aus a) oder b) in ein Gefäß B übergeführt und gegebenenfalls gekühlt wird,
d) die Mischung aus c), insbesondere zu einer Nachbehandlung, über die Mischeinheit in das Gefäß A rückgeführt wird
e) die Mischung aus d) über die Mischeinheit in das Gefäß B übergeführt wird, wobei in die Mischung wie in a) Treibmittel eingebracht werden kann,
f) die Mischung aus e) gegebenenfalls gekühlt wird, und
g) die Mischung aus f) durch eine verschließbare Austrittsöffnung, z. B. eine Düse, ausgetragen, z. B. gedrückt, wird,
wobei die Schritte d) bis f) mit einer Mischung aus e) gegebenenfalls wiederholt werden können und wobei die Polymerschäumung vor dem Austritt durch die Austrittsöffnung, insbesondere durch Einstellung eines konstanten Drucks im Verfahren, verhindert wird.

Ein Verfahren, das durch die vorliegende Erfindung zur Verfügung gestellt wird, wird hierin auch als "Verfahren nach (gemäß) vorliegender Erfindung" bezeichnet und kann beispielsweise folgendermaßen ausgeführt werden:
Ein Verfahren gemäß vorliegender Erfindung ist unabhängig von der Art des Polymers zur Herstellung von Polymerschäumen geeignet, wobei geeignete Polymere beispielsweise Polyester, Polyamide, Polyolefine, wie Polyethylene oder Polypropylene, Polyvinylchloride (PVC), Polystyrole oder Polyurethane umfassen.
Das Aufschmelzen des Polymers zum Erhalt einer Polymerschmelze in einem Verfahren gemäß vorliegender Erfindung aus Schritt a) kann gemäß, z. B. analog, einer üblichen Methode erfolgen, beispielsweise in einem Spritzaggregat, von dem die Polymerschmelze in eine Schmelzefördereinrichtung, z. B. eine Schmelzepumpeneinheit, gelangt, in der das Treibmittel zugegeben und gleichmäßig in der Polymerschmelze verteilt wird, und in der gegebenenfalls eine Kühlung des Polymer/Treibmittel Gemisches auf Austragstemperatur erfolgt.
Ein Polymer, das in einem Verfahren gemäß vorliegender Erfindung einsetzbar ist, umfasst auch Mischungen eines Polymers mit Additiven, wie Nukleierungsmittel, Pigmente, Füllstoffe, Stabilisatoren und/oder Vernetzer. Solche Additive können beispielsweise einer Polymerschmelze, die aus einem Spritzaggregat stammt, beigegeben werden, beispielsweise bevor die Schmelze in ein Gefäß A übergeführt wird, oder sie können dem Polymer bereits vor dem Schmelzen beigegeben werden.
Ein "Gefäß A" in einem Verfahren gemäß vorliegender Erfindung gemäß Schritt a) oder d) umfasst ein verschließbares Gefäß, in das die Polymerschmelze in einem Schritt a), oder eine Mischung aus Schritt c) eingebracht werden kann. Das Gefäß ist Teil einer Schmelzefördereinrichtung, z. B. eine Schmelzepumpeneinheit, in der ein konstanter Druck, beispielsweise mit Hilfe eines Hydraulikaggregates, eingestellt werden kann. Gefäß A kann mit der Polymerschmelze aus a) mit Hilfe eines Spritzaggregats oder einem Einschneckenextruder etc. befüllt und mit Hilfe einer Druckeinrichtung, z. B. einem Stempel, der bewegt werden kann, z. B. hydraulisch, wieder entleert werden. Das Gefäß A kann aber auch mit Hilfe einer Druckeinrichtung aus dem Gefäß B, z. B. einem Stempel, der bewegt werden kann, z. B. hydraulisch, in einem Schritt d) über die Mischeinheit befüllt werden. Das Material, aus dem das Gefäß A hergestellt ist, ist aus bruchsicherem und hitzebeständigem Material, das z. B. Glas, Metall und/oder Kunststoff umfasst. Die Form des Gefäßes A ist für die Durchführung eines Verfahrens gemäß vorliegender Erfindung nicht von Belang und umfasst beispielsweise eine zylindrische Form. Ein "Gefäß A" wird hierin auch als "Füllzylinder" bezeichnet. Gefäß A kann mit Hilfe einer Temperatureinrichtung beheizt oder gekühlt werden.

Ein Treibmittel in einem Verfahren gemäß vorliegender Erfindung ist ein Mittel, das eine Polymerschmelze zum Aufschäumen veranlassen kann und umfasst
- chemische Substanzen, die unter den Verfahrensbedingungen in einen Zustand übergehen können, in dem sie als Treibmittel wirken,
   z.B. niedrig siedende Kohlenwasserstoffe, die unter den Verfahrenstemperaturen in den gasförmigen Zustand übergehen, oder
   reaktionsfähige Substanzen, die eine Reaktion mit dem Polymer in der Schmelze auslösen können, wobei Substanzen, z. B. Gase, freiwerden, die die Polymerschmelze zum Aufschäumen veranlassen, oder, bevorzugt,
- Gase, vorzugsweise ein Gas, das in der Polymerschmelze inert ist, also ein Gas, das keine Reaktion mit dem Polymer in der Schmelze unter den Verfahrensbedingungen eingeht, beispielsweise umfassend CO₂ und N₂. Vorzugsweise liegt ein Gas in einem Verfahren gemäß vorliegender Erfindung in komprimierter Form vor, vorzugsweise im superkritischen Zustand (z. B. geht CO₂ geht bei sehr moderaten Bedingungen, 73,8 bar und 31°C, in den superkritischen Zustand über). Im superkritischen Zustand wird die Löslichkeit des Gases im Polymer signifikant erhöht, was zu hoher Nukleierungsdichte und feiner Zellstruktur des Polymerschaums, der nach einem Verfahren gemäß vorliegender Erfindung erhalten werden kann, führen kann.

In einem Verfahren gemäß vorliegender Erfindung wird das Treibmittel zwischen dem Gefäß A und einer Mischeinheit in die die Polymerschmelze aus dem Gefäß A gemäß Schritt b) übergeführt wird, in die Polymerschmelze eingebracht oder das Treibmittel wird in einer Mischeinheit in die die Polymerschmelze aus dem Gefäß A gemäß Schritt a) übergeführt wird, eingebracht. Das Einbringen des Treibmittels kann nach einer üblichen Methode erfolgen, z. B. analog, und erfolgt bei Verwendung eines Gases bevorzugt mit Hilfe einer Gaseinleitungsvorrichtung, die beispielsweise Gaseinlässe umfasst, die direkt in die Polymerschmelze hineinragen.

Eine "Mischeinheit" in einem Verfahren gemäß vorliegender Erfindung umfasst eine verschließbare Vorrichtung, in der das Treibmittel und die Polymerschmelze gemischt werden, und die gegebenenfalls einen Einlass für das Einbringen des Treibmittels in die Polymerschmelze aufweist. Vorrichtungen in der ein Treibmittel und eine Polymerschmelze gemischt werden können sind bekannt und umfassen Vorrichtungen aus Hitze und druckbeständigen Materialien, wie z. B. Glas, Metall und/oder Kunststoff. Die Mischeinheit ist Teil einer Schmelzefördereinrichtung, z. B. Schmelzepumpeneinheit, in der ein konstanter Druck, beispielsweise mit Hilfe eines Hydraulikaggregates, eingestellt werden kann. Das Durchströmen der Mischeinheit mit einer Polymerschmelze in einem Verfahren gemäß vorliegender Erfindung erfolgt im Schritt a), b) oder e) aus dem Gefäß A mit Hilfe einer Druckeinrichtung, z. B. einem Stempel, der bewegt werden kann, z. B. hydraulisch, oder im Schritt d) aus dem Gefäß B mit Hilfe einer Druckeinrichtung, z. B. einem Stempel, der bewegt werden kann, z. B. hydraulisch. Die Mischeinheit kann mit Hilfe einer Temperatureinrichtung beheizt oder gekühlt werden und enthält Scher(fließ)zonen, in denen die Mischung des Treibmittels mit der Polymerschmelze erfolgen kann. Eine Mischeinheit in einem Verfahren gemäß vorliegender Erfindung ist beispielsweise eine Mischkammer. Eine "statische Mischeinheit" umfasst eine Mischeinheit, in der das Mischgut, ein Gemisch aus Polymerschmelze/Treibmittel, nicht aktiv durch eine Vorrichtung in der Mischeinheit, sondern durch eine Vorrichtung, die außerhalb der Mischeinheit angebracht ist, bewegt wird, beispielsweise mit Hilfe einer Druckeinrichtung die Gefäß A oder im Gefäß B angebracht ist.

Ein "Gefäß B" in einem Verfahren gemäß vorliegender Erfindung gemäß Schritt c) oder e) umfasst ein verschließbares Gefäß, in das das Gemisch aus Polymerschmelze/Treibmittel in einem Schritt c) oder e) aus der Mischeinheit eingebracht werden kann. Das Gefäß ist Teil einer Schmelzefördereinrichtung, z. B. Schmelzepumpeneinheit, in der ein konstanter Druck, beispielsweise mit Hilfe eines Hydraulikaggregates, eingestellt werden kann. Das Gefäß B kann aber auch mit Hilfe einer Druckeinrichtung aus dem Gefäß A, z. B. einem Stempel, der bewegt werden kann, z. B. hydraulisch, in einem Schritt c) oder e) befüllt werden. Das Material, aus dem das Gefäß B hergestellt ist aus bruchsicherem und hitzebeständigem Material, das z. B. Glas, Metall und/oder Kunststoff umfasst. Die Form des Gefäßes B ist für die Durchführung eines Verfahrens gemäß vorliegender Erfindung nicht von Belang und umfasst beispielsweise eine zylindrische Form. Ein "Gefäß B" wird hierin auch als "Dosierzylinder" bezeichnet. Gefäß B kann mit Hilfe einer Temperatureinrichtung beheizt oder gekühlt werden.

Eine "Nachbehandlung" in einem Verfahren gemäß vorliegender Erfindung, Schritt d) umfasst eine Wiederholung der Schritte a) bis c), gegebenenfalls unter geänderten Verfahrensparametern, z. B. geändertem Druck und/oder geänderter Temperatur. Eine Nachbehandlung kann in einem Verfahren gemäß vorliegender Erfindung beliebig oft erfolgen.

In einem Verfahren gemäß vorliegender Erfindung wird beim Austritt der Mischung Polymer/Treibmittel durch die Austrittsöffnung, infolge des veränderten Drucks, eine Polymerschäumung erhalten.

In einem Verfahren gemäß vorliegender Erfindung ist ein möglichst hoher und schneller Druckabfall am Aufschäumpunkt erwünscht, wobei der Druckabfall, den die Mischung aus Polymer und Treibmittel in der Austrittsöffnung, dem letzten Ausformbereich, erfährt typischerweise 50 bar bis 250 bar und darüber, umfasst, je nach Polymer/Treibmittel-Kombination und gewünschtem Aufschäumgrad. Dieser Druckabfall sollte aber auf jeden Fall über den gesamten Düsenaustrittsspalt gleich sein und möglichst sollte auch die Druckabfallfunktion für alle Stromfäden gleich sein.

Für ein zu realisierendes Produkt ist eine bestimmte Geometrie der Austrittsöffnung notwendig. Mit einer gegebenen Schmelzeviskosität und dem erforderlichen Druckabfall ist damit der Mindestdurchsatz für das Produkt festgelegt. Soll aufgrund einer Rezepturänderung oder gewünschter niedrigerer Dichte ein höherer Druckabfall eingestellt werden, kann dieser z.B. über eine Durchsatzerhöhung erzielt werden.

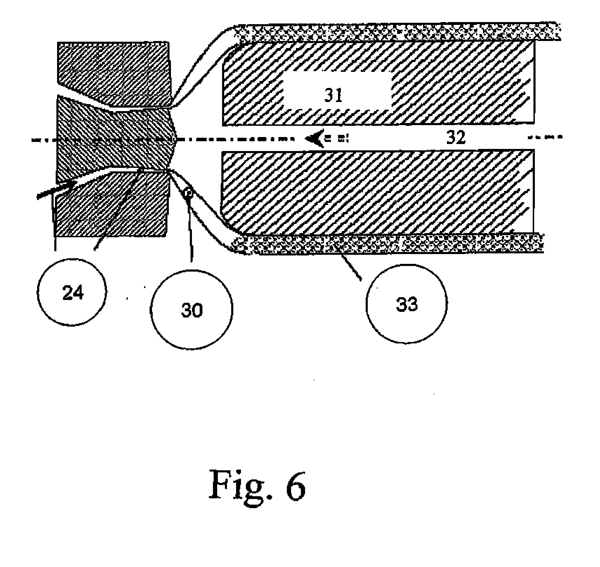

Geeignete Düsen zur Extrusion der Polymer/Treibmittelmischung gemäß dem Verfahren der vorliegenden Erfindung umfassen Schlitz- oder Viellochdüsen (Mehrlochdüsen), Celluka®-Düsen, rotationssymmetrischen Ringspaltdüsen, siehe z.B. Fig. 6, z. B. zur Herstellung von Schlauchfolien oder Rohren, gegebenenfalls mit Anpassungen betreffend die letzte Bügelzone und die Krümmung der Düsenmündung zur Stützung des wachsenden Schlauches da der Austrittswinkel mit dem Aufschäumwinkel übereinstimmen sollte; oder Breitschlitzdüsen, bevorzugt Mehrlochdüsen.

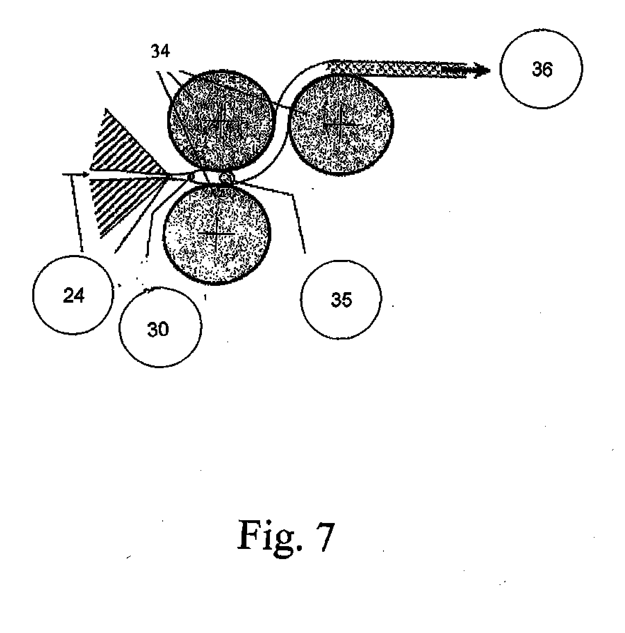

Für Breitschlitzdüsen, siehe beispielsweise Fig. 7, zum Extrusionsschäumen können etwa folgende Vorgaben angeführt werden:
- Schwere bis schwerste Ausführung zur Verhinderung von Verformung,
- Ausrüstung mit Staubalken und Flexlippe,
- Bestmögliche Temperierung, evtl. zusätzliche Öltemperierung der Lippe,
- Absolut gleichmäßiger bzw. stetig ändernder Fluss,
- Druckerhaltung bis zum Düsenaustritt durch kontinuierliche Querschnittsverringerung bis zur Bügelzone.

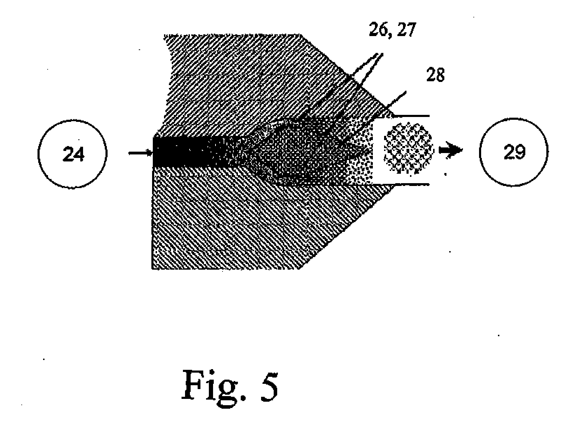

Eine Sonderstellung nimmt die Celluka®-Düse ein, bei der in der Düse aufgeschäumt wird, und die schematisch in Fig. 5 dargestellt ist. Die Verwendung einer solchen Düse setzt natürlich wandgleitende Schmelze voraus, wie sie mit PVC realisiert werden kann. Bei allen anderen Verfahren zur Polymerschaumherstellung ist zu frühes Aufschäumen im allgemeinen nicht erwünscht, da die Schaumstruktur in den Scherfließzonen nahe der Düsenoberfläche sofort zerstört wird.

Ein Verfahren gemäß vorliegender Erfindung kann z. B. folgendermaßen durchgeführt werden:
Ein Polymer wird, z. B. mittels einer Extrusionsspritzeinheit, aufgeschmolzen und die Schmelze wird in ein Gefäß A, z. B. einen Füllzylinder, eingespritzt. Die Schmelze wird vom Gefäß A über eine, beispielsweise statische, Mischeinheit in ein Gefäß B, z. B. einen Dosierzylinder, gedrückt. Während dieses Vorganges wird unmittelbar vor der Mischeinheit ein Treibmittel, vorzugsweise ein Gas, vorzugsweise ein Gas im überkritischen Zustand eingebracht, z. B. über eine Gasdosierstation zudosiert. Das Gefäß B ist derart ausgestaltet, dass es mit konstantem Druck gegen den in der Mischeinheit und im Gefäß A erzeugten Druck wirken kann, wodurch eine Polymerschäumung, z. B. ein Aufschäumen der Mischung, verhindert werden kann. Mittels des Gefäßes B, z. B. mittels des Dosierzylinders, wird das Polymer-/Gasgemisch über die Mischeinheit wieder in das Gefäß A, z. B. den Füllzylinder, zurückgedrückt. Dieser Vorgang kann beliebig oft wiederholt werden, wobei die Verfahrensparameter, z. B. Druck und/oder Temperatur, für jeden Vorgang jeweils beliebig abgeändert werden können.

Das Gemisch aus Polymer und Treibmittel, das erhalten wird, wird im Gefäß B gegebenenfalls gekühlt und druckgeregelt über eine Austrittsöffnung, z. B. eine Düse, ausgetragen.
Die Düsenkanäle können geschlossen oder geöffnet werden, beispielsweise werden sie durch Öffnen eines Schiebers oder Walzenverschlusses freigegeben. Eine besonders bevorzugte Düse umfasst eine Nukleierungszone (hohe Druckabfallsrate), eine Stabilisationszone (zur homogenen Bildung von Bläschen) und einen Düsenmund (formgebend bei mittlerer Druckabfallsrate).

Beim Austritt der Mischung Polymer/Treibmittel durch die Düse wird, infolge des veränderten Drucks, eine Polymerschäumung erreicht, das heißt der Schmelzestrang beginnt spontan nach dem Düsenaustritt mit dem Schäumen. Dieser Vorgang endet entweder mit dem sich einstellenden Gleichgewicht zwischen dem Gasdruck in den Zellen und der Spannkraft der Schmelze in den Zellwänden oder aber mit dem Kontakt mit einer irgendwie gearteten Kalibrierung.
Der erhaltene Polymerschaum bzw. das erhaltene Polymerschaumteil sollte anschließend möglichst schnell abgekühlt, bzw. stabilisiert werden um die nach dem Aufschäumen sehr schöne Schaumstruktur zu erhalten, was beispielsweise durch Einhaltung einer möglichst niedrigen Schmelzetemperatur begünstigt werden kann. Kann der erhaltene Polymerschaum nicht schnell und gleichmäßig genug abgekühlt werden, kann es zum nachträglichen Zellwachstum kommen, aber auch Nachschäumen und gegebenenfalls kann, z. B. je nach Treibmittelauswahl, sogar ein Kollabieren beobachtet werden.

Gemäß einem Verfahren nach vorliegender Erfindung und durch geeignete Wahl des Polymers, des Treibmittels und der Verfahrensbedingungen können Polymerschäume erhalten werden, die erwünschte Eigenschaften haben, beispielsweise
- abhängig vom polymeren Matrixmaterial thermoplastische, elastomere und duroplastische Schäume,
- abhängig von der Zellstruktur
   - offenzellige Polymerschäume, in denen die Poren miteinander verbunden sind, die im allgemeinen weich und flexibel sind und eine hohe Durchlässigkeit für Flüssigkeiten und Gase, eine hohe Absorptionsfähigkeit für Feuchtigkeit und Wasser und eine hervorragende Fähigkeit zur Schalldämpfung aufweisen;
   - geschlossene Polymerschäume in denen die Poren durch eine geschlossene Polymerwand getrennt sind, die durch die geschlossene Polymerwand um die einzelnen Zellen im allgemeinen hart und steif sind, die sich im allgemeinen durch eine gute Isolationswirkung gegen Wärme und elektrischen Strom auszeichnen und eine hohe mechanische Dämpfung und eine gute Druckfestigkeit aufweisen können,
   - Polymerschäume, bei denen sowohl offene, als auch geschlossene Zellen im Schaum vorliegen
   - Polymerschäume, in denen die Zellen gleichmäßig über den Querschnitt verteilt sind (gleichmäßige Dichteverteilung),
   - Polymerschäume die eine graduierte Zellverteilung aufweisen (Integralschäume), in denen die Zellenanzahl von der Mitte des Querschnittes zum Rand hin kontinuierlich abnimmt und in denen in der äußersten Schicht praktisch keine Zellen mehr vorhanden (kompakter Kunststoff), und die im allgemeinen trotz signifikanter Dichtereduktion noch eine hohe Steifigkeit, insbesondere gegen Biegebeanspruchungen aufweisen,
- abhängig von der Dichte Polymerschäume im Dichtebereich von 0,4 bis 0,6 g cm⁻, die insbesondere Anwendungen finden können, wo eine Gewichtseinsparung ohne große Abnahme der mechanischen Eigenschaften erwünscht ist, oder, in Fällen, in denen es hauptsächlich auf die Eigenschaften des verteilten Gases ankommt z. B. Wärmeisolation, Schäume mit Dichten bis < 0,1 g cm⁻³,
- abhängig von der Zellgröße in grobzellige (>100 µm), feinzellige (100 µm bis 10 µm) und mikrozelluläre (< 10 µm) Polymerschäume, wobei sich die Zellgröße auf die mechanischen Eigenschaften auswirkt und die Zugfestigkeit, die Bruchdehnung und die mechanische Dämpfung mit abnehmendem Zelldurchmesser ansteigt.

Ein Verfahren gemäß vorliegender Erfindung weist gegenüber herkömmlichen Verfahren zur Herstellung von Polymerschäumen eine Reihe von Vorteilen auf:
- Der Aufschmelzprozess und der Treibmittelinjektionsprozess sind von einander entkoppelt,
- Die Einbringung des Treibmittels in die Polymerschmelze kann beliebig oft und in unterschiedlichen Konzentrationen durchgeführt werden. Somit kann an eine gleichmäßige und feine Verteilung des Treibmittels im Polymer sichergestellt werden,
- Der Mischprozess Polymer/Treibmittel kann beliebig oft erfolgen, wodurch unerwünschte Diffusionsprozesse, die sich durch das Ausdiffundieren des Treibmittels aus der Polymerschmelze ergeben können, kompensiert oder verhindert werden können,
- Das Verfahren kann unter hohen Verarbeitungsdrücken durchgeführt werden, was vorteilhaft sein kann, z. B. wird die Gaslöslichkeit durch hohe Verarbeitungsdrücke wesentlich erhöht,
- Der Kühlvorgang findet unabhängig von den vorhergehenden Prozessschritten statt,
- Das Verfahren kann jederzeit und beliebig lang angehalten werden, ohne dass die Qualität des Polymerschaums, der mit Hilfe des Verfahrens gemäß vorliegender Erfindung erhalten werden kann, nennenswert negativ beeinflusst wird.

Ein Verfahren gemäß vorliegender Erfindung umfasst ein Batch-Verfahren.

Mit Hilfe eines Verfahrens gemäß vorliegender Erfindung. wird die Herstellung von Bauteilen mit beliebigen Geometrien, geringem Gewicht und hohen mechanischen Anforderungen ermöglicht. Beispielsweise können in einem Polymerschaum Parameter umfassend den Treibmittelanteil, die Ausdiffundierung des Treibmittels aus dem Polymer/Treibmittel Gemisch, den Druck, die Temperatur und die Durchmischung durch zwei- oder mehrmaliges Behandeln der Polymer/Treibmittelmischung beeinflusst werden,
wobei alle diese Parameter einen Einfluss auf die Schaumbildung bzw. auf die Art der Schaumbildung haben.

In einem anderen Aspekt stellt die vorliegende Erfindung eine Vorrichtung zur Herstellung von Polymerschäumen, z. B. in einem Batch-Verfahren, zur Verfügung, die umfasst
- eine erste Anordnung, die zur Herstellung einer Polymerschmelze aus einem Polymer geeignet ist, insbesondere ein Spritzaggregat, dessen Austrittsöffnung verschlossen werden kann, z. B. dessen Austrittsöffnung in Form einer Nadelverschlussdüse vorliegt, der mit einem Gefäß A in direkter Verbindung steht, und
- eine zweite Anordnung, insbesondere eine Schmelzefördereinrichtung, z.B. eine Schmelzepumpeneinheit, umfassend
   - ein Gefäß A, das eine Vorrichtung zur Befüllung einer Mischeinheit, oder eines Gefäßes B und zur Entleerung des Gefäßes A umfasst, insbesondere einen Füllzylinder, das einerseits mit einer Anordnung, die zur Herstellung einer Polymerschmelze geeignet ist und andererseits mit einer Mischeinheit in direkter Verbindung steht,
   - eine Mischeinheit, insbesondere eine Mischkammer, die befüllt und entleert werden kann. insbesondere eine statische Mischeinheit, die einerseits mit einem Gefäß A, und andererseits mit einem Gefäß B in direkter Verbindung steht und gegebenenfalls eine Einlassöffnung für ein Treibmittel, insbesondere eine Gaseinlassöffnung umfasst,
   - eine Einlassöffnung für ein Treibmittel, die entweder zwischen Gefäß A und Mischeinheit, oder in der Mischeinheit angebracht ist, insbesondere eine Gaseinlassöffnung,
   - ein Gefäß B, das eine Vorrichtung zur Befüllung einer Mischeinheit, oder eines Gefäßes A und zur Entleerung des Gefäßes B umfasst, das in direkter Verbindung mit der Mischeinheit und mit einer Austrittsöffnung steht, insbesondere einen Dosierzylinder,
   - eine Einrichtung zum unabhängigen Beheizen und Kühlen des Gefäßes A, der Mischeinheit und des Gefäßes B, und
   - eine verschließbare Austrittsöffnung, insbesondere eine verschließbare Düse, die eine direkte Verbindung zum Gefäß B aufweist,
wobei in der zweiten Anordnung ein konstanten Druck eingestellt und aufrechterhalten werden kann und wobei die zweite Anordnung derart ausgestaltet ist, dass ein Gemisch aus einer Polymerschmelze/Treibmittel vom Gefäß A über die Mischeinheit zum Gefäß B überführt und vom Gefäß B über die Mischeinheit zum Gefäß A rücküberführt werden kann.

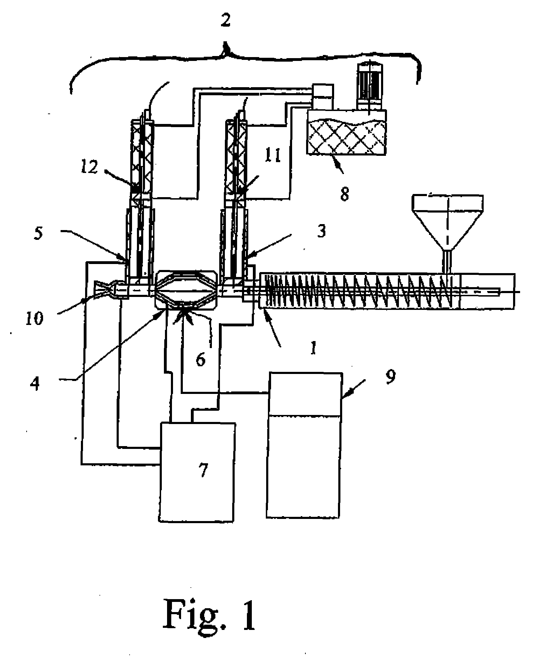

In einem weiteren Aspekt stellt die vorliegende Erfindung eine Vorrichtung zur Herstellung von Polymerschäumen, z. B. in einem Batch-Verfahren, gemäß vorliegender Erfindung zur Verfügung, die umfasst
- ein Spritzaggregat (1), das mit einem Füllzylinder (3) in direkter Verbindung steht und dessen Austrittsöffnung in Form einer Nadelverschlussdüse vorliegt,
- eine Schmelzefördereinrichtung, insbesondere eine Schmelzepumpeneinheit (2), umfassend
- einen Füllzylinder (3), der eine Vorrichtung zur Befüllung einer Mischkammer (4), oder eines Dosierzylinders (5) und zur Entleerung des Füllzylinders (3) umfasst, der einerseits mit dem Spritzaggregat (1) und andererseits mit einer Mischkammer (4) in direkter Verbindung steht,
- eine Mischkammer (4), die befüllt und entleert werden kann, die einerseits mit einem Füllzylinder (3), und andererseits mit einem Dosierzylinder (5) in direkter Verbindung steht und eine Gaseinlassöffnung (6), die mit einer Gasdosierstation (9) verbunden ist, umfasst,
- einen Dosierzylinder (5), der eine Vorrichtung zur Befüllung einer Mischkammer (4), oder eines Füllzylinders (3) und zur Entleerung des Dosierzylinders (5) umfasst, der in direkter Verbindung mit einer Mischkammer (4) und mit einer Austrittsöffnung (10) steht,
- eine Anordnung (7) zum unabhängigen Beheizen und Kühlen des Füllzylinders (3), der Mischkammer (4) und des Dosierzylinders (5),
- eine Gaseinlassöffnung (6) für ein Treibmittel, die entweder zwischen dem Füllzylinder (3) und der Mischkammer, oder in der Mischkammer angebracht ist,
- eine verschließbare Austrittsöffnung (10), insbesondere eine verschließbare Düse, die eine direkte Verbindung zum Dosierzylinder (5) aufweist,
wobei die Vorrichtung derart angeordnet ist, dass in der Schmelzefördereinrichtung (2) ein konstanter Druck in der Vorrichtung, z. B. mit Hilfe eines Hydraulikaggregats (8) eingestellt und aufrechterhalten werden kann und wobei die Schmelzefördereinrichtung (2) derart ausgestaltet ist, dass ein Gemisch aus einer Polymerschmelze/Treibmittel vom Füllgefäß (3) über die Mischkammer (4) zum Dosiergefäß (5) überführt, und vom Dosiergefäß (5) über die Mischkammer (4) zum Füllgefäß (3) rücküberführt werden kann; z.B. eine Vorrichtung gemäß Fig. 1.

### Beschreibung der Abbildungen

Fig. 1 zeigt schematisch eine Vorrichtung gemäß vorliegender Erfindung, in der (1) ein Spritzaggregat, (2) eine Schmelzeförderungseinrichtung, insbesondere eine Schmelzepumpeneinheit, (3) einen Füllzylinder, (4) eine Mischkammer, (5) einen Dosierzylinder, (6) eine Gaseinlassöffnung, (7) eine Anordnung zum unabhängigen Beheizen und Kühlen des Füllzylinders (3), der Mischkammer (4) und des Dosierzylinder (5); (8) ein Hydraulikaggregat, (9) eine Gasdosierstation, (10) eine Austrittsöffnung und (11) und (12) jeweils einen, mit Hilfe des Hydraulikaggregats (8) hydraulisch betriebenen Stempel, mit dessen Hilfe der Dosierzylinder (5) bzw. der Füllzylinder (3) befüllt und entleert werden können, bedeuten.

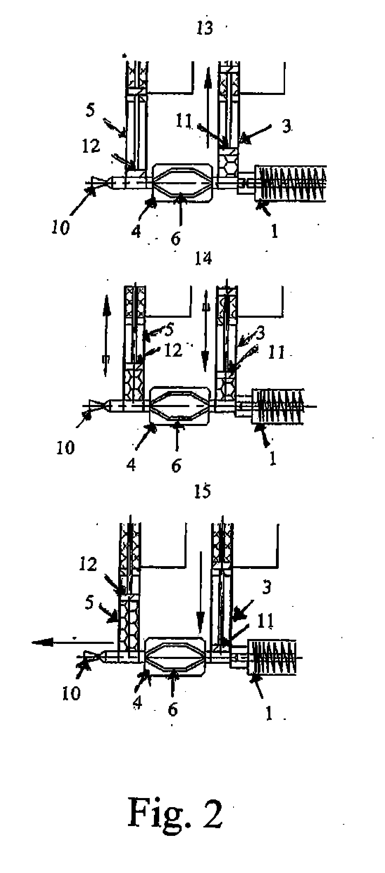

Fig. 2 zeigt schematisch einen Verfahrensablauf eines Verfahrens gemäß vorliegender Erfindung in einer Vorrichtung gemäß vorliegender Erfindung, nämlich einer Vorrichtung gemäß Fig. 1.
Im Verfahrensablauf (13), obere Abbildung, ist gezeigt, wie der Füllzylinder (3) mit einer Polymerschmelze aus dem Spritzaggregat (1) befüllt wird.
Im Verfahrensablauf (14), mittlere Abbildung, ist gezeigt, wie die Polymerschmelze aus dem Füllzylinder (3) in der Mischkammer (4) mit einem Treibmittel, das über die Gaseinlassöffnung (6) eingebracht, gemischt und die Mischung aus Polymer/Treibmittel anschließend mit Hilfe des Stempels (11) in den Dosierzylinder (5) gedrückt wird.
Im Verfahrensablauf (15), untere Abbildung, ist gezeigt, wie die fertige Mischung aus Polymer/Treibmittel mit Hilfe des Stempels (12) aus dem Dosierzylinder (5) durch die Austrittsöffnung (10) gedrückt wird.

Fig. 3 zeigt schematisch den Verfahrensablauf beim Schäumen mit physikalischen Treibmitteln. (16) stellt eine Polymerschmelze dar, die mit einem Treibmittel (17) beladen wird, worauf sich ein zweiphasiges Gemisch (18) und (19) bildet, in der das Gas sorbiert wird und diffundiert und durch die Maßnahme Mischen (20) in eine einphasige Lösung (21) übergeht, in der in (22) eine Nukleierung und in (23) das Wachstum und die Fixierung erfolgt sind.

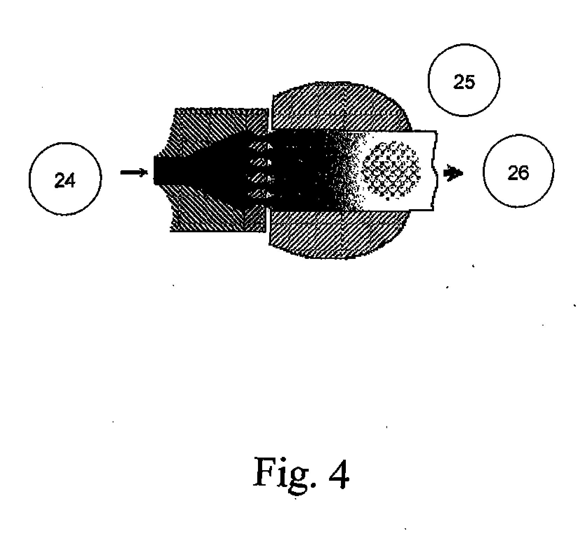

Fig. 4 zeigt schematisch eine Viellochdüse, aus der die gasbeladene Polymerschmelze (24) extrudiert und durch Maßnahmen wie Kühlung/Kalibrierung (25) in einen Polymerschaum (26) mit einem bestimmten Schaumprofil extrudiert wird.

Fig. 5 zeigt schematisch eine Celluka®-Düse, aus der die gasbeladene Polymerschmelze (24), vorbei an Haltestegen (26), (27) und einem Verdrängungskörper (28), extrudiert und zu einem Schaumkörper (29) aufgeschäumt wird.

Fig. 6 zeigt schematisch eine Ringspaltdüse, aus der die gasbeladene Polymerschmelze (24) durch die Extrusion zur aufschäumenden Schmelze (30) und, an einem Kühldorn (31), der von Stütz- und Kühlluft (32) durchflossen wird, zu einer Schaumfolie (33) wird.

Fig. 7 zeigt schematisch eine Breitschlitzdüse, aus der die gasbeladene Polymerschmelze (24) durch die Extrusion zur aufschäumenden Schmelze (30), und an Kühlwalzen (34) zu einer voll ausgeschäumten Schmelze (35) wird., die zu einem geschäumten Produkt (36) gewalzt wird.

## Patentansprüche

1. Verfahren zum Polymerschäumen durch Aufschmelzen des Polymers, Überführung der Schmelze in eine Mischeinheit unter Einbringen eines Treibmittels und Austragen des Schmelze/Treibmittelgemisches durch eine Austrittsöffnung, **dadurch gekennzeichnet, dass**
a) in eine Polymerschmelze, entweder unmittelbar bevor die Schmelze aus einem Gefäß A in eine Mischeinheit übergeführt wird, oder in einer Mischeinheit, ein Treibmittel, eingebracht wird,
b) die Mischung aus Polymer/Treibmittel aus a) gegebenenfalls in die Mischeinheit übergeführt wird,
c) die Mischung aus a) oder b) in ein Gefäß B übergeführt und gegebenenfalls gekühlt wird,
d) die Mischung aus c), insbesondere zu einer Nachbehandlung, über die Mischeinheit in das Gefäß A rückgeführt wird
e) die Mischung aus d) über die Mischeinheit in das Gefäß B übergeführt wird, wobei in die Mischung wie in a) Treibmittel eingebracht werden kann,
f) die Mischung aus e) gegebenenfalls gekühlt wird, und
g) die Mischung aus f) durch eine verschließbare Austrittsöffnung, insbesondere eine Düse, ausgetragen wird,
wobei die Schritte d) bis f) mit einer Mischung aus e) gegebenenfalls wiederholt werden und wobei die Polymerschäumung vor dem Austritt durch die Austrittsöffnung, insbesondere durch Einhaltung eines konstanten Drucks im Verfahren, verhindert wird.

2. Verfahren nach Anspruch 1, **dadurch gekennzeichnet, dass** als Polymer Polyester, Polyamide, Polyolefine, Polyvinylchloride, Polystyrole oder Polyurethane eingesetzt werden.

3. Verfahren nach einem der Ansprüche 1 oder 2, **dadurch gekennzeichnet, dass** das Treibmittel ein Gas, insbesondere CO₂ oder N₂, ist.

4. Verfahren nach einem der Ansprüche 1 bis 3, **dadurch gekennzeichnet, dass** das Gas in komprimierter Form, insbesondere im superkritischen Zustand, in die Polymerschmelze eingebracht wird.

5. Verfahren nach einem der Ansprüche 1 bis 4, **dadurch gekennzeichnet, dass** das Gefäß A, das Gefäß B und die Mischeinheit derart ausgestaltet sind, dass das Gefäß A, das Gefäß B und die Mischeinheit unabhängig voneinander beheizt oder gekühlt werden können.

6. Verfahren nach einem der Ansprüche 1 bis 4, **dadurch gekennzeichnet, dass** die Austrittsöffnung eine Mehrlochdüse darstellt.

7. Vorrichtung zur Herstellung von Polymerschäumen, die umfasst
- eine erste Anordnung, die zur Herstellung einer Polymerschmelze aus einem Polymer geeignet ist, insbesondere ein Spritzaggregat, dessen Austrittsöffnung verschlossen werden kann, und der mit einem Gefäß A in direkter Verbindung steht, und
- eine zweite Anordnung, insbesondere eine Schmelzefördereinrichtung, insbesondere eine Schmelzepumpeneinheit, umfassend
- ein Gefäß A, das eine Vorrichtung zur Befüllung einer Mischeinheit, oder eines Gefäßes B und zur Entleerung des Gefäßes A umfasst, insbesondere einen Füllzylinder, das einerseits mit einer Anordnung, die zur Herstellung einer Polymerschmelze geeignet ist und andererseits mit einer Mischeinheit in direkter Verbindung steht,
- eine Mischeinheit, insbesondere eine Mischkammer, die befüllt und entleert werden kann. insbesondere eine statische Mischeinheit, die einerseits mit einem Gefäß A, und andererseits mit einem Gefäß B in direkter Verbindung steht und gegebenenfalls eine Einlassöffnung für ein Treibmittel, insbesondere eine Gaseinlassöffnung umfasst,
- eine Einlassöffnung für ein Treibmittel, die entweder zwischen Gefäß A und Mischeinheit, oder in der Mischeinheit angebracht ist, insbesondere eine Gaseinlassöffnung,
- ein Gefäß B, das eine Vorrichtung zur Befüllung einer Mischeinheit und eines Gefäßes A und zur Entleerung des Gefäßes B umfasst, das in direkter Verbindung mit der Mischeinheit und mit einer Austrittsöffnung steht, insbesondere einen Dosierzylinder,
- eine Einrichtung zum unabhängigen Beheizen und Kühlen des Gefäßes A, der Mischeinheit und des Gefäßes B, und
- eine verschließbare Austrittsöffnung, insbesondere eine verschließbare Düse, die eine direkte Verbindung zum Gefäß B aufweist,
wobei in der zweiten Anordnung ein konstanten Druck eingestellt und aufrechterhalten werden kann und wobei die zweite Anordnung derart ausgestaltet ist, dass ein Gemisch aus einer Polymerschmelze/Treibmittel vom Gefäß A über die Mischeinheit zum Gefäß B überführt und vom Gefäß B über die Mischeinheit zum Gefäß A rücküberführt werden kann.

8. Vorrichtung zur Herstellung von Polymerschäumen nach Anspruch 7, die umfasst
- ein Spritzaggregat (1), der mit einem Füllzylinder (3) in direkter Verbindung steht und dessen Austrittsöffnung in Form einer Nadelverschlussdüse vorliegt,
- eine Schmelzefördereinrichtung, insbesondere eine Schmelzepumpeneinheit (2), umfassend
- einen Füllzylinder (3), der eine Vorrichtung zur Befüllung einer Mischkammer (4), oder eines Dosierzylinders (5) und zur Entleerung des Füllzylinder (3) umfasst, der einerseits mit einen ersten Extruder (1) und andererseits mit einer Mischkammer (4) in direkter Verbindung steht,
- eine Mischkammer (4), die befüllt und entleert werden kann, die einerseits mit einem Füllzylinder (3), und andererseits mit einem Dosierzylinders (5) in direkter Verbindung steht und eine Gaseinlassöffnung (6), die mit einer Gasdosierstation (9) verbunden ist, umfasst,
- einen Dosierzylinder (5), der eine Vorrichtung zur Befüllung einer Mischkammer (4), oder eines Füllzylinders (3) und zur Entleerung des Dosierzylinders (5) umfasst, der in direkter Verbindung mit einer Mischkammer (4) und mit einer Austrittsöffnung (10) steht,
- eine Anordnung (7) zum unabhängigen Beheizen und Kühlen des Füllzylinders (3), der Mischkammer (4) und des Dosierzylinder (5),
- eine Gaseinlassöffnung (6) für ein Treibmittel, die entweder zwischen dem Füllzylinder (3) und der Mischkammer, oder in der Mischkammer angebracht ist,
- eine verschließbare Austrittsöffnung (10), insbesondere eine verschließbare Düse, die eine direkte Verbindung zum Dosierzylinder (5) aufweist,
wobei die Vorrichtung derart angeordnet ist, dass in der Schmelzefördereinrichtung, insbesondere in der Schmelzepumpeneinheit (2) ein konstanter Druck in der Vorrichtung, eingestellt und aufrechterhalten werden kann und wobei die Schmelzefördereinrichtung, insbesondere die Schmelzepumpeneinheit (2) derart ausgestaltet ist, dass ein Gemisch aus einer Polymerschmelze/Treibmittel vom Füllgefäß (3) über die Mischkammer (4) zum Dosiergefäß (5) überführt, und vom Dosiergefäß (5) über die Mischkammer (4) zum Füllgefäß (3) rücküberführt werden kann.

9. Vorrichtung nach einem der Ansprüche 7 oder 8, zur Verwendung in einem Verfahren nach einem der Ansprüche 1 bis 6.

10. Verfahren nach einem der Ansprüche 1 bis 6, **dadurch gekennzeichnet, dass** eine Vorrichtung nach einem der Ansprüche 7 oder 8 verwendet wird.
